(19) Europäisches Patentamt
European Patent Office
Office européen des brevets

(11) **EP 4 601 024 A1**

(12) **EUROPEAN PATENT APPLICATION**

(43) Date of publication:
**13.08.2025 Bulletin 2025/33**

(21) Application number: 24221519.2

(22) Date of filing: **19.12.2024**

(51) International Patent Classification (IPC):
*H01M 4/04* $^{(2006.01)}$   *H01M 4/133* $^{(2010.01)}$
*H01M 4/583* $^{(2010.01)}$   *H01M 10/0525* $^{(2010.01)}$
*H01M 10/0567* $^{(2010.01)}$

(52) Cooperative Patent Classification (CPC):
**H01M 4/0407; H01M 4/133; H01M 4/583;**
**H01M 10/0525; H01M 10/0567;** H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **08.02.2024   CN 202410178050**

(71) Applicant: **Nio Technology (Anhui) Co., Ltd**
**Hefei City, Anhui 230601 (CN)**

(72) Inventor: **QIAN, Weirui**
**Anhui, 230601 (CN)**

(74) Representative: **Torggler & Hofmann**
**Patentanwälte - Innsbruck**
**Torggler & Hofmann Patentanwälte GmbH & Co**
**KG**
**Wilhelm-Greil-Straße 16**
**6020 Innsbruck (AT)**

(54) **SECONDARY BATTERY AND DEVICE**

(57)    A secondary battery is provided. The secondary battery includes a cathode, an anode, and an electrolyte, wherein the electrolyte includes a fluorine-containing sulfonylimide lithium salt, and the content in percentage by mass of the fluorine-containing sulfonylimide lithium salt is L%, based on the total mass of the electrolyte; and the anode includes an anode active material and a solid electrolyte interface film on the surface of the anode active material, the anode has a compacted density of Y g/cm$^3$, the solid electrolyte interface film has a thickness of M nm, and the anode active material has an OI value of N. The secondary battery satisfies: $2.5 \leq \dfrac{50L}{M+15Y+6N} \leq 17$. The secondary battery satisfying the defined relationship has excellent low-temperature performance and rate performance.

EP 4 601 024 A1

## Description

### TECHNICAL FIELD

The disclosure relates to the field of lithium batteries, and in particular to a secondary battery and a device.

### BACKGROUND ART

Achieving excellent low-temperature performance and high-rate performance has been a persistent challenge in the field of traction batteries. In recent years, with the rapid development of traction batteries, the demand for lithium-ion batteries with excellent low-temperature performance and high-rate performance has become increasingly strong in the industry. However, most of the relevant studies and reports have focused on the electrolyte or the electrode separately, and few have tried to create a lithium-ion power battery with excellent low-temperature performance and high-rate performance through the synergistic optimization of an electrode and electrolyte.

### SUMMARY

Given the above problems of prior art, the disclosure proposes a secondary battery and a device. For the secondary battery of the disclosure, the matching relationship between the content in percentage by mass of the fluorine-containing sulfonylimide lithium salt in the electrolyte, the thickness of the solid electrolyte interface film formed on the surface of the anode active material, the compacted density of the anode, and the OI value of the anode active material is controlled to improve the low-temperature performance and rate performance of the lithium-ion secondary battery.

A first aspect of the disclosure provides a secondary battery. The secondary battery includes a cathode, an anode, and an electrolyte, wherein the electrolyte includes a fluorine-containing sulfonylimide lithium salt, and the content in percentage by mass of the fluorine-containing sulfonylimide lithium salt is $L\%$, based on the total mass of the electrolyte; and the anode includes an anode active material and a solid electrolyte interface film on the surface of the anode active material, the anode has a compacted density of $Y$ g/cm$^3$, the solid electrolyte interface film has a thickness of $M$ nm, and the anode active material has an OI value of $N$. The secondary battery satisfies:

$$2.5 \leq \frac{50L}{M + 15Y + 6N} \leq 17$$

A second aspect of the disclosure provides a device, including the secondary battery described above.

The technical solution of the disclosure can achieve the following beneficial effects:

For the secondary battery of the disclosure, the content in percentage by mass of the fluorine-containing sulfonylimide lithium salt in the electrolyte, the compacted density of the anode, the thickness of the solid electrolyte interface film formed on the surface of the anode active material, and the OI value of the anode active material are controlled to satisfy a specific relationship, which allows the synergistic optimization of both the formulation of the electrolyte and the anode, and additionally an excellent lithium-ion transport rate of lithium ions in the electrolyte, at the interface between the electrolyte and the anode, and in the anode, thereby improving the low-temperature performance and rate performance of the secondary battery.

### DETAILED DESCRIPTION OF EMBODIMENTS

In order to make the objectives, technical solutions, and advantages of the disclosure clearer, the technical solutions of the disclosure will be clearly and completely described below in conjunction with examples. Apparently, the described examples are some, rather than all, of the examples of the disclosure. The relevant examples described here are illustrative and intend to provide a basic understanding of the disclosure. The examples of the disclosure should not be construed as limiting the disclosure.

For the sake of brevity, only some numerical ranges are specifically disclosed herein. However, any lower limit may be combined with any upper limit to form an unspecified range; moreover, any lower limit may be combined with other lower limits to form unspecified ranges, and likewise, any upper limit may be combined with any other upper limit to form an unspecified range. In addition, each individually disclosed point or individual numerical value itself may, as a lower or upper limit, be combined with any other point or individual numerical value or with other lower or upper limits to form unspecified ranges.

In the description herein, unless otherwise stated, "or more" and "or less" include the given number.

Unless otherwise stated, the terms used in the disclosure have the meanings commonly understood by those skilled in the art. Unless otherwise stated, the numerical values of the parameters mentioned in the disclosure can be measured by various measuring methods commonly used in the art (e.g., according to the methods given in the examples of the disclosure).

The list of items connected by the term "at least one of" or other similar terms may mean any combination of the listed items. For example, if items A and B are listed, the phrase "at least one of A and B" means only A; only B; or A and B. In another example, if items A, B and C are listed, the phrase "at least one of A, B and C" means only A; or only B; only C; A and B (excluding C); A and C (excluding B); B and C (excluding A); or all of A, B and C. Item A may include a single component or a plurality of components. Item B may include a single component or a plurality of components. Item C may include a single component or a plurality of components.

## I. Secondary battery

One or more examples of the disclosure provide a secondary battery. The secondary battery includes a cathode, an anode, and an electrolyte, wherein the electrolyte includes a fluorine-containing sulfonylimide lithium salt, and the content in percentage by mass of the fluorine-containing sulfonylimide lithium salt is L%, based on the total mass of the electrolyte; and the anode includes an anode active material and a solid electrolyte interface film on the surface of the anode active material, the anode has a compacted density of Y g/cm$^3$, the solid electrolyte interface film has a thickness of M nm, and the anode active material has an OI value of N. The secondary battery satisfies:

$$2.5 \leq \frac{50L}{M + 15Y + 6N} \leq 17$$

In the disclosure, the matching relationship between the content in percentage by mass of the fluorine-containing sulfonylimide lithium salt, the compacted density of the anode, the thickness of the solid electrolyte interface film of the anode, and the OI value of the anode active material are adjusted and controlled to satisfy the numerical ranges defined above. Under such a defined condition, an excellent lithium-ion transport rate of lithium ions in the electrolyte, at the interface between the electrolyte and the anode, and in the anode is achieved, such that the low-temperature performance and rate performance of the secondary battery can be significantly improved.

An excessively low numerical value of $2.5 \leq \frac{50L}{M+15Y+6N} \leq 17$ means a low overall transport rate of lithium ions in the electrolyte, at the interface between the electrolyte and the anode, and in the anode, which leads to poor low-temperature performance and rate performance of the battery; and if the numerical value of $2.5 \leq \frac{50L}{M+15Y+6N} \leq 17$ is excessively high, the lithium battery will have poor cycling stability.

In some examples, $2.5 \leq \frac{50L}{M+15Y+6N} \leq 17$ is 2.5, 3, 3.2, 3.5, 4, 4.5, 5, 5.5, 6, 6.5, 7, 7.5, 8, 9, 10, 11, 13, 15 or 17, or in a range consisting of any two of the above values.

In some examples, $3 \leq \frac{50L}{M+15Y+6N} \leq 8.5$. Within such a defined range, the lithium-ion transport rate can be further optimized, which is conducive to improving the low-temperature performance and rate performance of the secondary battery.

In some embodiments, the fluorine-containing sulfonylimide lithium salt includes at least one of lithium bis(fluorosulfonyl)imide (LiFSI), lithium (trifluoromethanesulfonyl)(perfluorobutanesulfonyl)imide (LiFNFSI), and lithium bis(trifluoromethane sulfonyl)imide (LiTFSI).

In some examples, 0.2 < L ≤ 25. Since the fluorine-containing sulfonylimide lithium salt has anions with a large radius, lithium ions can be easily generated by dissociation, which is conducive to the migration of lithium ions and weakens concentration polarization. As a result, on the one hand, the transport rate of lithium ions in the electrolyte can be improved, and on the other hand, the deintercalation and intercalation of lithium ions at the interface between the electrolyte and the anode can be facilitated, thereby improving the low-temperature performance and fast-charge performance of the battery. However, when in an excessively high content in percentage by mass, the fluorine-containing sulfonylimide lithium salt will, under a high potential, easily react with aluminum foil as a cathode current collector, leading to corrosion of the aluminum foil, thereby affecting battery performance. In some embodiments, 1 ≤ L ≤ 14.

In some examples, 5 ≤ M ≤ 100. When the solid electrolyte interface film on the surface of the anode active material is too thick, the impedance of the secondary battery is high, and the kinetic performance is limited, thus affecting the low-temperature performance and fast-charge performance of the secondary battery. When the solid electrolyte interface film on the surface of the anode is too thin, the continuous side reaction of the anode surface with the electrolyte cannot be inhibited, resulting in poor cycling stability. A solid electrolyte interface film having a thickness within such a defined range may ensure that the secondary battery has not only high cycling stability but also excellent low-temperature performance and fast-charge performance. In the disclosure, the thickness of the solid electrolyte interface film can be adjusted by conventional technical means in the art, for example, by controlling the temperature and time of formation and adjusting the formulation of the electrolyte. In some embodiments, $10 \leq M \leq 30$.

In some embodiments, $0.5 \leq Y \leq 5$. If the compacted density of the anode is excessively high, the electrolyte will have poor infiltration performance, and the desolvation process of lithium ions will be hindered, thus affecting the kinetic performance of the secondary battery. An excessively low compacted density leads to low conductivity and volumetric energy density of the anode and easily leads to continuous side reactions between the electrolyte and the anode; as a result, the secondary battery will have poor cycling stability. A compacted density within such a defined range may ensure that the secondary battery has not only high cycling stability but also excellent low-temperature performance and fast-charge performance. In the disclosure, the compacted density of the anode can be adjusted according to the properties of the selected active material, by conventional technical means in the art, for example, by controlling the rolling pressure, rolling temperature and rolling speed for the electrode plate. In some embodiments, $1 \leq Y \leq 3$.

In some embodiments, $0.5 \leq N \leq 15$. When the OI value of the anode active material is excessively high, the anode active material (e.g., graphite particles) tends to be parallel to the anode current collector, such that fewer edge planes will be available for the deintercalation of active lithium ions, and the battery is prone to lithium precipitation during cycling, leading to poor kinetic performance of the battery. When the OI value of the anode active material is excessively small, unfavorable lithium dendrite formation is inhibited, but the anode is prone to wrinkling and powder falling during cycling, thus leading to poor cycling stability. An anode active material having an OI value within such a defined range may ensure that the anode has high cycling stability; meanwhile, the graphite particles tend to be arranged perpendicular to the anode current collector. As a result, the deintercalation of lithium ions at the interface between the anode and the electrolyte can be ensured, such that the kinetic performance of the secondary battery is improved, thereby improving the low-temperature performance and fast-charge performance of the system. In some embodiments, $1 \leq N \leq 5$. The OI value of the anode active material can be controlled by the sintering temperature and sintering time during the graphite production process.

In some embodiments, the cathode includes a cathode active material. In some embodiments, the cathode active material includes a lithium iron phosphate material, and the lithium iron phosphate material includes at least one of materials represented by formula $Li_xFe_yR_{(1-y)}PO_4$, where R includes at least one of Mn, Co, Ti, Mg, Ca, Cr, Cu, Ni, V, Mo, Zn, Al, B, and Nb, $0.05 \leq x \leq 1.2$, and $0 < y \leq 1$. In some embodiments, the lithium iron phosphate material is a lithium manganese iron phosphate material. A lithium iron phosphate material having an olivine structure has poor conductivity and lithium-ion diffusion ability, especially at a low temperature, thus leading to a worse lithium-ion transport rate. Therefore, it is more necessary to increase the transport rate of lithium ions in the electrolyte, at the interface between the electrolyte and the anode, and in the anode to improve the overall lithium-ion transport rate of the secondary battery, thereby achieving better low-temperature performance and rate performance.

In some examples, there is a carbon coating layer on the surface of the lithium iron phosphate material; and the content in percentage by mass of the carbon coating layer is 1% to 3%, based on the mass of the lithium iron phosphate material. It can be appreciated that a too-thin carbon coating layer cannot effectively improve the conductivity of the cathode material itself, leading to unsatisfactory rate performance of the lithium-ion battery; and if the carbon coating layer is excessively thick, the energy density of the lithium-ion battery will be significantly reduced, and additionally, the coating nonuniformity will be more obvious and lead to increased defects, thus affecting the cycling performance of the lithium-ion battery. In some examples, the content in percentage by mass of the carbon coating layer is 1%, 1.5%, 1.6%, 1.7%, 1.8%, 1.9%, 2.0%, 2.1%, 2.2%, 2.3%, 2.4%, 2.5%, or 3%, or in a range consisting of any two of the above values.

In some embodiments, in addition to those mentioned above, the cathode active material may also include lithium nickel oxide, lithium nickel cobalt aluminum oxide, lithium nickel cobalt manganese oxide, lithium nickel manganese cobalt magnesium oxide, and lithium nickel manganese oxide.

In some examples, the cathode active material layer further includes a binder, and optionally a conductive material. The binder improves the bonding between the cathode active material particles, and also improves the bonding of the cathode active material with the current collector.

In some examples, the binder includes, but is not limited to, polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, acrylated styrene-butadiene rubber, epoxy resin, nylon, etc.

In some examples, the conductive material includes, but is not limited to, a carbon-based material, a metal-based material, a conductive polymer, and a mixture thereof. In some examples, the carbon-based material is selected from natural graphite, artificial graphite, carbon black, acetylene black, Ketjen black, carbon fiber, or any combination thereof. In some examples, the metal-based material is selected from metal powder, metal fiber, copper, nickel, aluminum or silver. In some examples, the conductive polymer is a polyphenylene derivative.

In some examples, the cathode further includes a cathode current collector, and the cathode current collector may be a metal foil or a composite current collector. For example, aluminum foil may be used. The composite current collector may be formed by forming a metal material (copper, a copper alloy, nickel, a nickel alloy, titanium, a titanium alloy, silver and a silver alloy) on a polymer substrate.

In some examples, the anode active material layer includes an anode active material, and the anode active material includes a carbon-based material, including at least one of graphite, soft carbon, hard carbon, carbon nanotubes, and graphene. Exemplarily, a tin-based material includes at least one of tin, tin oxide, and a tin alloy. Exemplarily, a phosphorus-based material includes at least one of phosphorus and a phosphorus composite.

In some examples, the anode active material layer further includes a binder and a conductive agent. The binder includes, but is not limited to, at least one of polyvinyl alcohol, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, poly(1,1-difluoroethylene), polyethylene, polypropylene, styrene-butadiene rubber, acrylated styrene-butadiene rubber, epoxy resin, nylon, etc. The conductive agent includes, but is not limited to, at least one of a carbon-based material, a metal-based material, a conductive polymer, and a mixture thereof. In some examples, the carbon-based material includes natural graphite, artificial graphite, carbon black, acetylene black, Ketjen black, carbon fiber, or any combination thereof. In some examples, the metal-based material includes metal powder, metal fiber, copper, nickel, aluminum, or silver. In some examples, the conductive polymer includes a polyphenylene derivative.

In some examples, the anode further includes an anode current collector, and the anode current collector includes at least one of copper foil, nickel foil, stainless-steel foil, titanium foil, nickel foam, copper foam, a polymer substrate covered with a conductive metal, or any combination thereof.

In some examples, the anode has a porosity $\varepsilon_1$, which satisfies: $28\% \leq \varepsilon_1 \leq 45\%$. If the porosity of the anode is excessively low, the infiltration performance of the electrolyte will be affected, which is detrimental to the formation of a stable solid electrolyte interface film on the surface of the anode. With the porosity of the anode controlled within the range described above, it is beneficial to ensuring a high energy density; additionally, it ensures the formation of a stable solid electrolyte interface film on the surface of the anode, thereby improving the cycling performance of the secondary battery. In some examples, $\varepsilon_1$ is 28%, 30%, 32%, 34%, 36%, 38%, 40%, 42%, 44%, or 45%, or in a range consisting of any two of the above values.

In some examples, the electrolyte further includes an additional lithium salt, and the additional lithium salt includes at least one of lithium hexafluorophosphate (LiPF$_6$), lithium tetrafluoroborate (LiBF$_4$), lithium trifluorosulfonyl (LiOTf), lithium bis(oxalate)borate (LiBOB), lithium bis(fluoromalonate)borate (LiBFMB) and lithium difluoro(oxalate) borate (LiDFOB). In some examples, the additional lithium salt is LiPF$_6$.

In some examples, the electrolyte further includes a solvent, and the solvent includes at least one of a chain carbonate compound, a cyclic carbonate compound and a carboxylate compound.

In some examples, the chain carbonate compound includes, but is not limited to, one or more of dimethyl carbonate (DMC), diethyl carbonate (DEC), dipropyl carbonate (DPC), methyl propyl carbonate (MPC), ethyl propyl carbonate (EPC) and methyl ethyl carbonate (MEC).

In some examples, the cyclic carbonate compound includes, but is not limited to, one or more of ethylene carbonate (EC), propylene carbonate (PC), butylene carbonate (BC), and vinyl ethylene carbonate (VEC).

In some examples, the carboxylate compound includes, but is not limited to, one or more of methyl formate, methyl acetate, ethyl acetate, n-propyl acetate, tert-butyl acetate, methyl propionate, ethyl propionate, propyl propionate, $\gamma$-butyrolactone, decalactone, valerolactone, and caprolactone.

In some examples, a separator is provided between the cathode and the anode to prevent short circuits. The material and shape of the separator that can be used in the examples of the disclosure are not particularly limited, and may be any technique disclosed in the prior art. In some examples, the separator includes a polymer, an inorganic substance, and the like, which are formed from a material that is stable to the electrolyte of the disclosure.

In some examples, the separator includes a base film, and a coating layer provided on the base film, and the base film includes at least one of a polyethylene film, a polypropylene film, a PP/PE/PP composite film, a polyimide film, an aramid film, a polyethylene terephthalate film and nonwoven fabric. In some examples, the coating layer includes at least one of a polymer layer, an inorganic ceramic layer, and a mixed layer of a polymer layer and an inorganic ceramic layer.

In some examples, the inorganic ceramic layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder includes at least one of polyvinylidene fluoride, a vinylidene fluoride-hexafluoropropylene copolymer, polyamide, polyacrylonitrile, a polyacrylate ester, polyacrylic acid, a polyacrylate salt, polyvinylpyrrolidone, polyethylene ether, polymethyl methacrylate, polytetrafluoroethylene, and polyhexafluoropropylene.

The polymer layer includes a polymer, and the material of the polymer includes at least one of polyamide, polyacrylonitrile, an acrylate polymer, polyacrylic acid, polyacrylate, polyvinylpyrollidone, polyvinyl ether, polyvinylidene fluoride, and poly(vinylidene fluoride-hexafluoropropylene).

In some examples, the preparation method of the secondary battery includes providing an electrode assembly, electrolyte filling, sealing, and formation. In some examples, the formation includes: at any temperature between 30°C and 60°C, for example 45°C, and under any pressure between 150 kgf and 400 kgf, for example 300 kgf, charging with a constant current of 0.05C for 100 minutes, charging with a constant current of 0.1C for 50 minutes, and charging with a constant current of 0.33C for 50 minutes.

In some examples, the secondary battery is a lithium secondary battery or a sodium secondary battery. In some examples, the lithium secondary battery includes, but is not limited to, a lithium metal secondary battery, a lithium-ion secondary battery, a lithium polymer secondary battery, or a lithium-ion polymer secondary battery.

In some examples, the secondary battery may include an outer package, which may be a hard case, such as a hard plastic case, an aluminum case, and a steel case. The outer package of the secondary battery may also be a soft package, such as a bag-type soft package. The material of the soft package may be plastics, for example, one or more of polypropylene (PP), polybutylene terephthalate (PBT), polybutylene succinate (PBS), and the like.

In some examples, the shape of the secondary battery is not particularly limited, and may be cylindrical, square, or any other shape.

In some examples, the disclosure further provides a battery module. The battery module includes the secondary battery described above. The battery module of the disclosure uses the secondary battery described above, thus at least having the same advantages as the secondary battery described above. The battery module of the disclosure may contain a plurality of secondary batteries, the specific number of which can be adjusted according to the application and capacity of the battery module.

In some examples, the disclosure further provides a battery pack, including the battery module described above. The number of battery modules contained in the battery pack can be adjusted according to the application and capacity of the battery pack.

## II. Device

The disclosure further provides a device, including at least one of the secondary battery, battery module, or battery pack described above.

In some examples, the device includes, but is not limited to, an electric vehicle, a hybrid electric vehicle, a plug-in hybrid electric vehicle, an electricity storage system, and the like. A battery pack or battery module can be used to meet the device's high power and high energy density requirements for secondary batteries.

In other embodiments, the apparatus may be a mobile phone, a tablet, a laptop, and the like. The device is generally required to be thin and light and may have a secondary battery used as a power source.

The secondary battery of the disclosure will be further described hereinafter in conjunction with specific examples and comparative examples.

### Examples and comparative examples

Examples and comparative examples will be given to further illustrate the disclosure in detail, but the disclosure is not limited thereto.

The materials, solvents and the like used in the following examples and comparative examples are commercially available.

### Example 1

Preparation of cathode: a cathode active material of $LiFePO_4$, conductive agents of carbon nanotubes (CNT) and acetylene black (ACET), and a binder of polyvinylidene fluoride (PVDF), in a weight ratio of $LiFePO_4$ : CNT : ACET : PVDF = 97 : 0.5 : 1 : 1.5, were fully homogenized in a solvent system of N-methylpyrrolidone (NMP), then uniformly applied onto one side surface of a cathode current collector of aluminum foil having a thickness of 12 $\mu$m, and dried; and then the steps described above were repeated on the other side surface of the aluminum foil to obtain a double-side-coated cathode, followed by cold pressing, cutting, and tab welding to obtain a cathode.

Preparation of anode: an anode active material of graphite, a conductive agent of acetylene black (ACET), a binder of styrene-butadiene rubber (SBR), and thickening agents of sodium carboxymethyl cellulose (CMCNa) and polyacrylic acid (PAA), in a weight ratio of graphite : ACET : SBR : CMCNa : PAA = 95 : 2 : 1.5 : 1 : 0.5, were fully homogenized in deionized water, then applied onto one side surface of an anode current collector of copper foil having a thickness of 8 $\mu$m, and dried; and then the steps described above were repeated on the other side surface of the copper foil to obtain a double-side-coated anode, followed by cold pressing, cutting, and tab welding to obtain an anode.

Preparation of electrolyte: in an argon-protected glove box (with a moisture content < 0.1 ppm, and an oxygen content < 0.1 ppm), solvents of ethylene carbonate (EC), ethyl methyl carbonate (EMC), and diethyl carbonate (DEC) were mixed in a mass ratio of EC : EMC : DEC = 25 : 55 : 20; and based on the mass of the solvent, lithium salts (LiFSI and $LiPF_6$) were added until the molar concentration was 1.2 mol/L, with the content in percentage by mass of LiFSI being 8%.

Separator: a three-layer PP/PE/PP composite film was used as a separator.

Preparation of lithium-ion secondary battery: the prepared cathode, separator, and anode were sequentially stacked so that the separator was located between the cathode and the anode, followed by winding to obtain a bare cell; and the bare cell was placed in an outer package made from an aluminum plastic film, fully dried, and then filled with the prepared electrolyte for a lithium-ion battery, and then the battery was left to stand at 45°C for 48 h and formed at 45°C using a fixture, followed by secondary sealing and conventional capacity grading. After formation, the solid electrolyte interface film on the surface of the anode active material had a thickness of 20 nm.

### Examples 2-14

On the basis of Example 1, Examples 2-14 were implemented by adjusting the content of the fluorine-containing sulfonylimide lithium salt in the electrolyte, the compacted density of the anode, the thickness of the solid electrolyte interface film on the surface of the anode active material, and the OI value of the anode active material. Specific adjustments and detailed data are shown in Table 1. Other preparation procedures were the same as in Example 1.

### Comparative examples 1-6

On the basis of Examples 1-14, Comparative examples 1-6 were implemented by adjusting the content of the fluorine-containing sulfonylimide lithium salt in the electrolyte, the compacted density of the anode, the thickness of the solid electrolyte interface film on the surface of the anode active material, the OI value of the anode active material, etc. Specific adjustments and detailed data are shown in Table 1. In Comparative example 1, the molar concentration of lithium salts was 2 mol/L. Other preparation procedures were the same as in Example 1.

### Test method

1. Test of compacted density of anode

Compacted density of anode = area density of anode $(g/cm^2)$/thickness of anode active material layer (cm). A piece of anode was cut and weighed, with the mass denoted as M1; then the anode active material layer on the anode was scraped off and weighed, with the mass denoted as M2; and the area of the anode was measured and denoted as V Area density of anode = (M1-M2)/V. The thickness of the anode active material layer was the total thickness of the anode minus the thickness of the anode current collector (e.g., foil). Here, the mass may be determined using a standard balance, and the thickness may be measured with a ten-thousandth micrometer.

2. Test of thickness of solid electrolyte interface film

The electrode plate after cycling was placed in a dimethyl carbonate solution and washed to remove the solvent and organic small-molecule residues; then the electrode plate was sent into a sample injection chamber and characterized using a cryo-electron microscope to obtain a specific cryo-electron microscope digital photo; and then the surface of the anode where there was a visible SEI film feature was measured using the imageJ software to obtain the thickness of the SEI film.

3. Test of OI value of anode active material

The OI value N of the anode active material is used to characterize the orientation index of the anode active material and can be calculated based on an X-ray diffraction spectrum obtained by measurement using an X-ray powder diffractometer, i.e., N = C004/C110, where C004 is the peak area of the characteristic diffraction peak of the [004] crystal plane of the anode active material, and C110 is the peak area of the characteristic diffraction peak of the [110] crystal plane of the anode active material. The specific test method was as follows: with the ambient temperature controlled at 15-25°C and the ambient humidity controlled at 20%-80%, the anode active material was attached to one end of a slide glass using a double-sided adhesive tape and placed in an X-ray powder diffractometer (Bruker D8 Discover), with the scan angle set in a range of 50-80°, a step size set to 0.01°, and the duration of each step set to 0.9 S to obtain the X-ray diffraction spectrum of the anode active material. Then, the diffraction peak area of the [004] crystal plane and the diffraction peak area of the [110] crystal plane of the anode active material were calculated using a software, and the OI value N of the anode active material was obtained according to the equation N = C004/C110.

4. Test of capacity retention rate after 2,000 cycles at conventional rate at 25°C

At 25°C, the prepared lithium-ion secondary battery was charged to 3.8 V with a constant current at a rate of 1C, and then charged with a constant voltage until the current was less than 0.05C. After leaving to stand for 5 min, the battery was discharged to 2.7 V at a rate of 1C, and the initial discharge capacity was recorded. The lithium-ion secondary battery was subjected to 2,000 charge/discharge cycles according to the method described above, and the discharge capacity of each time was recorded. Capacity retention rate of lithium-ion secondary battery after 2,000 cycles at conventional rate at 25°C = discharge capacity of the 2,000th discharge/initial discharge capacity × 100%.

5. Test of capacity retention rate at -20°C

At 25°C, the prepared lithium-ion secondary battery was charged to 3.8 V with a constant current at a rate of 0.33C, and then charged with a constant voltage until the current was less than 0.05C. After leaving to stand for 5 min, the battery was discharged to 2.7 V at a rate of 0.1C, and the discharge capacity at room temperature was recorded. Then, the lithium-ion secondary battery was cooled to -20°C, and charged to 3.8 V with a constant current at a rate of 0.33C, and then charged with a constant voltage until the current was less than 0.05C. After leaving to stand for 5 min, the battery was discharged to 2.7 V at a rate of 0.1C, and the discharge capacity at -20°C was recorded. Capacity retention rate of lithium-ion secondary battery at -20°C = discharge capacity at - 20°C/initial discharge capacity × 100%.

6. Test of capacity retention rate after 750 fast-charge cycles at 25°C

At 25°C, the prepared lithium-ion secondary battery was charged to 3.8 V with a constant current at a rate of 2C, and then charged with a constant voltage until the current was less than 0.05C. After leaving to stand for 5 min, the battery was discharged to 2.7 V at a rate of 0.5C, and the initial discharge capacity was recorded. The lithium-ion secondary battery was subjected to 750 charge/discharge cycles according to the method described above, and the discharge capacity of each time was recorded. Capacity retention rate of lithium-ion secondary battery after 750 fast-charge cycles at 25°C = discharge capacity of the 750th discharge/initial discharge capacity × 100%.

The test data are shown in Table 1 below.

Table 1

| Examples and comparative examples | Electrolyte | Solid electrolyte interface film | Electrode plate | | 50L/( M+15Y+6N) | Formation temperature (°C) | Capacity retention rate after 2,000 cycles at conventional rate at 25 °C | Test of capacity retention rate at -20°C | Test of capacity retention rate after 750 fast-charge cycles at 25°C |
|---|---|---|---|---|---|---|---|---|---|
| | Content in percentage by mass of fluorine-containing sulfonylimide lithium salt L (%) | Thickness of solid electrolyte interface film M (nm) | OI value of anode active material N | Compacted density of anode Y (g/cm$^3$) | | | | | |
| Example 1 | 8 | 20 | 3 | 1.6 | 6.45 | 45 | 80% | 60% | 90% |
| Example 2 | 10 | 20 | 3 | 1.6 | 8.06 | 45 | 81% | 62% | 92% |
| Example 3 | 4 | 20 | 3 | 1.6 | 3.23 | 45 | 80% | 58% | 88% |
| Example 4 | 18 | 20 | 3 | 1.6 | 14.52 | 45 | 77% | 60% | 90% |
| Example 5 | 8 | 30 | 3 | 1.6 | 5.56 | 50 | 80% | 58% | 88% |
| Example 6 | 8 | 95 | 3 | 1.6 | 2.92 | 60 | 78% | 56% | 86% |
| Example 7 | 8 | 10 | 3 | 1.6 | 7.69 | 40 | 78% | 60% | 90% |
| Example 8 | 8 | 5 | 3 | 1.6 | 8.51 | 30 | 75% | 60% | 88% |
| Example 9 | 8 | 20 | 5 | 1.6 | 5.41 | 45 | 80% | 58% | 88% |
| Example 10 | 8 | 20 | 15 | 1.6 | 2.99 | 45 | 76% | 54% | 84% |
| Example 11 | 8 | 20 | 0.5 | 1.6 | 8.51 | 45 | 75% | 58% | 88% |
| Example 12 | 8 | 20 | 3 | 3 | 4.82 | 45 | 79% | 58% | 88% |
| Example 13 | 8 | 20 | 3 | 1 | 7.55 | 45 | 76% | 60% | 90% |
| Example 14 | 8 | 20 | 3 | 0.5 | 8.79 | 45 | 74% | 58% | 88% |
| Comparative example 1 | 30 | 20 | 3 | 1.6 | 24.19 | 45 | 69% | 58% | 81% |
| Comparative example 2 | 0.1 | 20 | 3 | 1.6 | 0.08 | 45 | 76% | 49% | 79% |
| Comparative example 3 | 8 | 140 | 3 | 1.6 | 2.20 | 70 | 76% | 48% | 78% |
| Comparative example 4 | 6 | 20 | 20 | 1.6 | 1.83 | 45 | 72% | 48% | 78% |

| Examples and comparative examples | Electrolyte | Solid electrolyte interface film | Electrode plate | | 50L/( M+15 Y+6N) | Formation temperature (°C) | Capacity retention rate after 2,000 cycles at conventional rate at 25 °C | Test of capacity retention rate at -20°C | Test of capacity retention rate after 750 fast-charge cycles at 25°C |
|---|---|---|---|---|---|---|---|---|---|
| | Content in percentage by mass of fluorine-containing sulfonylimide lithium salt L (%) | Thickness of solid electrolyte interface film M (nm) | OI value of anode active material N | Compacted density of anode Y (g/cm$^3$) | | | | | |
| Comparative example 5 | 18 | 20 | 0.1 | 1.6 | 20.18 | 45 | 65% | 56% | 79% |
| Comparative example 6 | 4 | 20 | 3 | 6 | 1.56 | 45 | 73% | 45% | 75% |

As can be seen from Examples 1-14, when the content in percentage by mass of the fluorine-containing sulfonylimide lithium salt, the thickness of the solid electrolyte interface film on the surface of the anode active material, the compacted density of the anode, and the OI value of the anode active material conform to the preset relationship, the cycling performance at a conventional rate at 25°C, the cycling performance of fast charging at 25°C, and the capacity retention rate at -20°C are all higher.

When compared with Comparative example 1, it can be seen that when the content in percentage by mass of the fluorine-containing sulfonylimide lithium salt is excessively high, its preset relationship with the thickness of the solid electrolyte interface film formed on the surface of the anode active material, the compacted density of the anode, and the OI value of the anode active material becomes disrupted, and the fluorine-containing sulfonylimide lithium salt with a high concentration will corrode the cathode current collector, leading to a significantly negative effect on the cycling performance at a conventional rate at 25°C and the cycling performance of fast charging at 25°C.

When compared with Comparative example 2, it can be seen that when the content in percentage by mass of the fluorine-containing sulfonylimide lithium salt is excessively low, its preset relationship with the thickness of the solid electrolyte interface film formed on the surface of the anode active material, the compacted density of the anode, and the OI value of the anode active material becomes disrupted. As a result, the battery system shows an extremely low lithium-ion transport rate due to the absence of highly dissociated lithium salts. This leads to poor fast-charge cycle performance at 25°C and poor capacity retention rate at -20°C.

When compared with Comparative example 3, it can be seen that an excessively high formation temperature makes the thickness of the solid electrolyte interface film formed on the surface of the anode active material excessively high, leading to the preset relationship with the content in percentage by mass of the fluorine-containing sulfonylimide lithium salt, the compacted density of the anode, and the OI value of the anode active material to be disrupted. In this case, the impedance of the system is high, and the cycling performance at a conventional rate at 25°C, the cycling performance of fast charging at 25°C, and the capacity retention rate at -20°C are all poor.

When compared with Comparative example 4, it can be seen that when the OI value of the anode active material is excessively high, its preset relationship with the compacted density of the anode, the thickness of the solid electrolyte interface film formed on the surface of the anode active material, and the content in percentage by mass of the fluorine-containing sulfonylimide lithium salt becomes disrupted. In this case, fewer edge planes are available for the deintercalation of active lithium ions, the battery is prone to lithium precipitation during cycling, and the kinetic performance of the battery is poor, leading to poor cycling performance at a conventional rate at 25°C, poor cycling performance of fast charging at 25°C, and poor capacity retention rate at -20°C.

When compared with Comparative example 5, it can be seen that when the OI value of the anode active material is excessively low, its preset relationship with the compacted density of the anode, the thickness of the solid electrolyte interface film formed on the surface of the anode active material, and the content in percentage by mass of the fluorine-containing sulfonylimide lithium salt becomes disrupted. In this case, the anode is prone to wrinkling and powder falling, leading to poor cycling performance at a conventional rate at 25°C and poor cycling performance of fast charging at 25°C.

When compared to Comparative example 6, it can be seen that when the compacted density of the anode is excessively high, its preset relationship with the thickness of the solid electrolyte interface film formed on the surface of the anode active material, the content in percentage by mass of the fluorine-containing sulfonylimide lithium salt, and the OI value of the anode active material becomes disrupted. In this case, the infiltration performance of the electrolyte is poor, and the desolvation process of lithium ions is hindered, such that the cycling performance at a conventional rate at 25°C, the cycling performance of fast charging at 25°C, and the capacity retention rate at -20°C are all poor.

Although some exemplary embodiments of the disclosure have been illustrated and described, the disclosure is not limited to the disclosed embodiments. Rather, those of ordinary skill in the art will recognize that some modifications and changes may be made to the described embodiments without departing from the scope of the disclosure as described in the appended claims.

**Claims**

1. A secondary battery, wherein the secondary battery comprises a cathode, an anode, and an electrolyte, wherein the electrolyte comprises a fluorine-containing sulfonylimide lithium salt, and the content in percentage by mass of the fluorine-containing sulfonylimide lithium salt is L%, based on the total mass of the electrolyte; and the anode comprises an anode active material and a solid electrolyte interface film on the surface of the anode active material, the anode has a compacted density of Y g/cm$^3$, the solid electrolyte interface film has a thickness of M nm, and the anode active material has an OI value of N; and the secondary battery satisfies:

$$2.5 \leq \frac{50L}{M+15Y+6N} \leq 17.$$

2. The secondary battery according to claim 1, wherein the secondary battery further satisfies:

$$3 \leq \frac{50L}{M+15Y+6N} \leq 8.5.$$

3. The secondary battery according to claim 1 or 2, wherein the secondary battery further satisfies at least one of the following conditions:

$$(1)\ 0.2 \leq L \leq 25;$$

$$(2)\ 5 \leq M \leq 100;$$

$$(3)\ 0.5 \leq Y \leq 5;$$

and

$$(4)\ 0.5 \leq N \leq 15.$$

4. The secondary battery according to claim 3, wherein the secondary battery further satisfies at least one of the following conditions:

$$(1)\ 1 \leq L \leq 14;$$

$$(2)\ 10 \leq M \leq 30;$$

$$(3)\ 1 \leq Y \leq 3;$$

and

$$(4)\ 1 \leq N \leq 5.$$

5. The secondary battery according to any one of claims 1 to 4, wherein the fluorine-containing sulfonylimide lithium salt comprises at least one of lithium bis(fluorosulfonyl)imide, lithium (trifluoromethanesulfonyl)(perfluorobutanesulfonyl) imide, and lithium bis(trifluoromethanesulfonyl)imide.

6. The secondary battery according to any one of claims 1 to 5, wherein the cathode comprises a lithium iron phosphate material, and the lithium iron phosphate material comprises at least one of materials represented by formula $Li_xFe_yR_{(1-y)}PO_4$, wherein R comprises at least one of Mn, Co, Ti, Mg, Ca, Cr, Cu, Ni, V, Mo, Zn, Al, B, and Nb, $0.05 \leq x \leq 1.2$, and $0 < y \leq 1$.

7. The secondary battery according to claim 6, wherein the surface of the lithium iron phosphate material is provided with a carbon coating layer, and the content in percentage by mass of the carbon coating layer is 1% to 3%, based on the mass of the lithium iron phosphate material.

8. The secondary battery according to any one of claims 1 to 7, wherein the secondary battery further satisfies at least one of the following conditions:

(1) the anode active material comprises at least one of graphite, soft carbon, hard carbon, carbon nanotubes, and graphene; and

(2) the anode has a porosity of $\varepsilon_1$, which satisfies: $28\% \leq \varepsilon_1 \leq 45\%$.

**9.** The secondary battery according to any one of claims 1 to 8, wherein the electrolyte further comprises a solvent and an additional lithium salt, wherein the solvent comprises at least one of a chain carbonate compound, a cyclic carbonate compound, and a carboxylate compound; and the additional lithium salt comprises at least one of lithium hexafluorophosphate, lithium tetrafluoroborate, lithium bis(oxalate)borate, lithium bis(fluoromalonate)borate, and lithium difluoro(oxalate)borate.

**10.** A device, wherein the device comprises the secondary battery according to any one of claims 1 to 9.

Europäisches
Patentamt

European
Patent Office

Office européen
des brevets

## EUROPEAN SEARCH REPORT

**Application Number**

EP 24 22 1519

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 417 570 B (WEILAI BATTERY TECH ANHUI CO LTD) 22 August 2023 (2023-08-22) * paragraph [0013]; claims 1,4; examples * ----- | 1-10 | INV. H01M4/04 H01M4/133 H01M4/583 H01M10/0525 H01M10/0567 |
| X | CN 116 470 143 A (WEILAI BATTERY TECH ANHUI CO LTD) 21 July 2023 (2023-07-21) * paragraph [0029]; claims 1,4; examples * ----- | 1-10 | |

**TECHNICAL FIELDS SEARCHED (IPC)**

H01M

The present search report has been drawn up for all claims

| Place of search | Date of completion of the search | Examiner |
|---|---|---|
| Munich | 4 July 2025 | Duval, Monica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 1519

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | | Publication date | Patent family member(s) | | Publication date |
|---|---|---|---|---|---|
| CN 116417570 | B | 22-08-2023 | CN<br>WO | 116417570 A<br>2024255699 A1 | 11-07-2023<br>19-12-2024 |
| CN 116470143 | A | 21-07-2023 | NONE | | |

EPO FORM P0459

For more details about this annex : see Official Journal of the European Patent Office, No. 12/82